**Europäisches Patentamt**

**European Patent Office**

**Office européen des brevets**

(19)

(11) Veröffentlichungsnummer : **0 442 045 B1**

(12)

# EUROPÄISCHE PATENTSCHRIFT

(45) Veröffentlichungstag der Patentschrift :
**06.10.93 Patentblatt 93/40**

(51) Int. Cl.$^5$ : **C09J 123/14, C09J 123/20**

(21) Anmeldenummer : **90121755.4**

(22) Anmeldetag : **14.11.90**

(54) **Sprühbare Heissschmelzmasse mit massgeschneiderter Rheologie.**

(30) Priorität : **12.01.90 DE 4000696**

(43) Veröffentlichungstag der Anmeldung :
**21.08.91 Patentblatt 91/34**

(45) Bekanntmachung des Hinweises auf die
Patenterteilung :
**06.10.93 Patentblatt 93/40**

(84) Benannte Vertragsstaaten :
**AT BE CH DE ES FR GB LI NL SE**

(56) Entgegenhaltungen :
**EP-A- 0 331 410**
**US-A- 4 567 223**
**US-A- 4 749 739**

(73) Patentinhaber : **HÜLS**
**AKTIENGESELLSCHAFT**
**D-45764 Marl (DE)**

(72) Erfinder : **Kehr, Helmut, Dr.**
**Gustav-Sack-Strasse 8**
**W-4235 Schermbeck (DE)**
Erfinder : **Kühnle, Adolf, Dr.**
**Hoechster Strasse 6**
**W-4370 Marl (DE)**
Erfinder : **Schleinzer, Matthias, Dr.**
**Im Werth 39**
**W-4270 Dorsten 1 (DE)**

EP 0 442 045 B1

## Beschreibung

Sprühbare Heißschmelzmasse mit maßgeschneiderter Rheologie

Gegenstand der Erfindung ist eine leicht sprühbare Heißschmelzmasse auf Basis eines weitgehend amorphen Polyalphaolefins für Schmelzkleberanwendungen.

Auf dem Gebiet der Schmelzklebstoffe bzw. Hotmelts hat neben den bewährten Applikationsmethoden wie z. B. Walzen-, Raupen-, Schlitzdüsenauftrag etc. in den letzten Jahren auch die Sprühtechnologie Eingang gefunden. Grundsätzlich ist hierbei zu unterscheiden zwischen dem sogenannten "Atomisieren" der Schmelze und dem sogenannten "Spinnsprühen", das verschiedentlich auch als "controlled fiberization" bezeichnet wird. Beim erstgenannten Verfahren handelt es sich um ein Zerstäuben der Schmelze in feine Schmelzetröpfchen, während beim "Spinnsprühen" ein Schmelzefaden drallförmig die Sprühdüse verläßt und, ohne abzureißen, in einer spiralförmigen Bahn auf dem zu beschichtenden Substrat abgelegt wird. Die Sprühtechnologie erlaubt generell einen kontaktlosen Auftrag und das Beschichten von unebenen, unregelmäßigen Flächen. Sie eignet sich weiterhin für Anwendungen, wo zwar einerseits eine flächige Verklebung gewünscht wird, andererseits aber gefordert wird, daß die verklebte Ebene für Luft oder Feuchtigkeit durchlässig ist. Durch die Tatsache, daß kein vollflächiger Auftrag erfolgt, kann Material eingespart werden. Ein weiterer Vorteil zeigt sich bei der Beschichtung temperaturempfindlicher Substrate. Durch den kontaktlosen Auftrag und aufgrund des sehr geringen Wärmeinhalts der ankommenden Schmelze bzw. des Schmelzefadens wird das Substrat weit weniger belastet bzw. geschädigt als bei den üblichen Auftragstechnologien. Die Hotmelt-Sprühtechnologie ist umweltfreundlich und deckt insgesamt viele Anwendungen ab, die bislang den gesprühten lösungsmittelbasierten Klebstoffen vorbehalten waren.

Bei sprühbaren Hotmelts ist Stand der Technik, daß Formulierungen auf Basis von thermoplastischem Kautschuk und auch Formulierungen auf Basis von Ethylenvinylacetat gut sprühbar sind. Formulierungen auf Basis von thermoplastischem Kautschuk sind jedoch teuer und enthalten darüber hinaus relativ hohe Mengen Öl, was in manchen Fällen unerwünscht ist. Formulierungen auf Basis von Ethylenvinylacetat besitzen häufig eine zu kurze "offene Zeit", wodurch ihre Verarbeitungsbreite zeitlich stark eingeengt wird. Beispielsweise kann dies bedeuten, daß bei Verzögerungen im Produktionsablauf eine derartige Formulierung bereits vor der eigentlichen Applikation keine Klebkraft mehr aufweist.

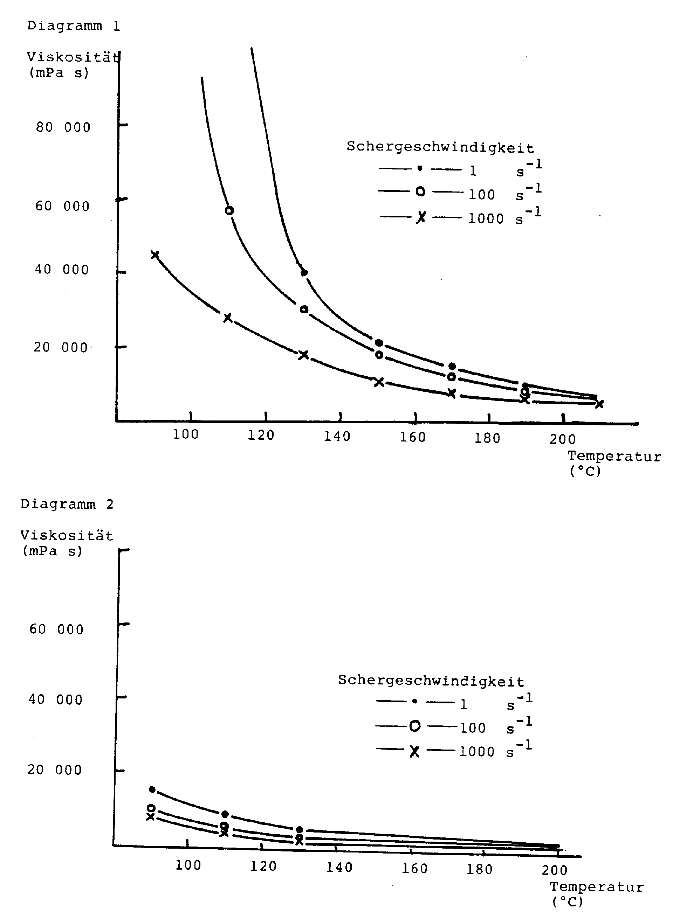

Weitgehend amorphe Polyalphaolefine zeigen diese Nachteile nicht und gelten grundsätzlich auch als sprühbar. Bei näherer Betrachtung stellt sich jedoch heraus, daß sie aufgrund ihrer rheologischen Eigenschaften zu keinem gleichmäßigen Sprühbild (d. h. zu ungleichmäßigem Auftrag) führen und daß es häufig zu Störungen beim Sprühvorgang, z.B. Tropfenbildung auf dem Substrat ("Klecksen") kommt. Letzteres kann bei temperaturempfindlichen Substraten wie z. B. LDPE-Folien zu Schädigungen führen, da der auf dem Substrat ankommende Klebstofftropfen einen zu hohen Wärmeinhalt besitzt. Zu den rheologischen Eigenschaften weitgehend amorpher Polyalphaolefine ist zu sagen, daß sie eine ausgeprägte Strukturviskosität und damit kein Newtonsches Fließverhalten besitzen. Das bedeutet, daß ihre Viskosität sehr stark von der Schergeschwindigkeit abhängt, die im Bereich der Sprühdüse relativ hoch ist, bereits kurz nach dem Verlassen der Düse aber zurückgeht. Für ein gleichmäßiges Sprühbild wird - wenn der Sprühdruck konstant gehalten wird - daher bei der entsprechenden Applikationstemperatur ein von der Schergeschwindigkeit weitgehend unabhängiger Viskositätswert benötigt. Diagramm 1 zeigt Viskositätskurven eines typischen amorphen Polyalphaolefins (Viskosität bei 190 °C ca. 8 000 mPas) in Abhängigkeit von der Temperatur und unter verschiedenen Scherbelastungen.

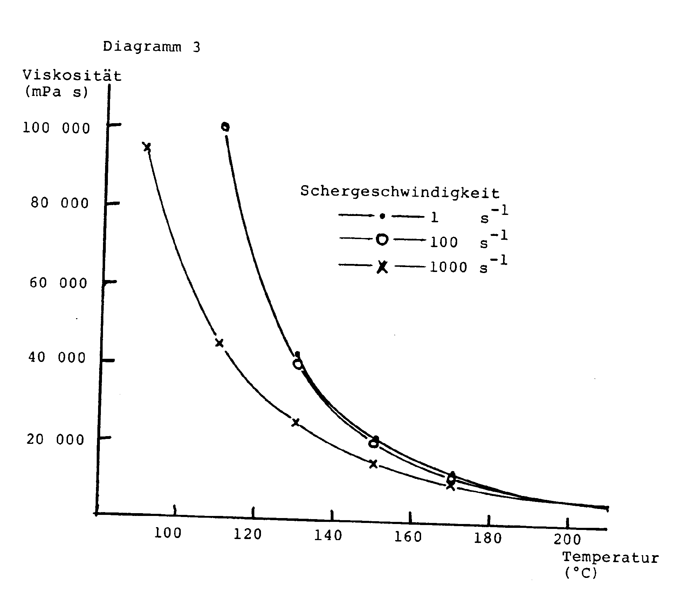

Bei Polyalphaolefinen mit relativ niedriger Schmelzviskosität (kleiner 1 000 mPas, bestimmt bei 190 °C) lassen sich derartig gravierende Unterschiede im Viskositätsverlauf zwar nicht beobachten (Diagramm 2), diese Produkte haben jedoch entweder ein zu niedriges Molekulargewicht (d. h. geringe Kohäsion) oder eine zu hohe Kristallinität (d. h. schlechte Adhäsion), so daß ein akzeptabler Klebverbund in der Regel nicht zu erreichen ist.

Das Sprühbild kann zwar grundsätzlich auch verbessert werden, wenn die Sprühtemperatur so gewählt wird, daß sie in einem geeigneten Abstand über der sog. "kritischen Sprühtemperatur" liegt (als "kritische Sprühtemperatur" wird diejenige Temperatur bezeichnet, oberhalb der die Schergeschwindigkeit keine nennenswerte Auswirkung mehr auf die Viskosität hat; sie liegt bei marktgängigen amorphen Polyalphaolefinen deutlich über 200 °C). Nachteilig ist aber dann, daß temperaturempfindliche Substrate nicht besprüht werden können und daß das zu sprühende Material im Schmelzebehälter wesentlich stärker thermisch belastet wird, was zu Abbaureaktionen, Verfärbungen, Geruchsbildung etc. führen kann. Eine Erhöhung des Sprühdruckes wäre, soweit es das Sprühbild anbetrifft, ebenfalls vorteilhaft, da man sich aufgrund der höheren Schergeschwindigkeit auf einer flacheren Viskositäts-/ Temperatur-Kurve bewegen würde, d. h. die Temperaturabhängigkeit der Viskosität wäre geringer. Hohe Sprühdrucke belasten jedoch bestimmte Substrate (z. B. Vliese) und führen darüber hinaus zu vermehrten Staub- und Faseraufwirbelungen (z. B. bei der Fixierung von Vliesen), so daß es bei vollautomatisierten Produktionsabläufen zu Störungen an Lichtschranken kommen kann.

Überraschenderweise wurde gefunden, daß bei weitgehend amorphen Polyalphaolefinen die gewünschte Rheologie über die Molekulargewichte gezielt eingestellt werden kann, so daß entsprechende Produkte diese Nachteile nicht zeigen. Die erfindungsgemäßen Polyalphaolefine weisen folgende Merkmale auf:

- ihr Erweichungspunkt, gemessen nach der Ring- und Kugelmethode entsprechend DIN 52 011, liegt zwischen 70 und 130 °C;
- ihre Schmelzviskosität bei 190 °C liegt zwischen 1 000 und 20 000 mPas;
- ihre Dichte ist kleiner als 0,90 g/cm³;
- die Nadelpenetration 100/25/5, gemessen in Anlehnung an DIN 52 010, beträgt zwischen 8 und 40 0,1 mm,
  (Gewicht der Nadel: 100 g; Temperatur 25 °C; Zeitdauer 5 s);
- hierbei beträgt das über Gelpermeationschromatographie bestimmte Molekulargewicht des weitgehend amorphen Polyalphaolefins im Gewichtsmittel (Mw) maximal 80 000 und im Zahlenmittel (Mn) mindestens 4 000, wobei die aus dem Gewichtsmittel und dem Zahlenmittel des Molekulargewichtes gebildete Differenz den sechsfachen Wert des Zahlenmittels nicht übersteigen darf. In anderen Worten heißt dies, daß die sogenannte "Uneinheitlichkeit" maximal den Wert 6 betragen darf. Derartige Polyalphaolefine sind bei niedrigen Temperaturen (unter 200 °C) und niedrigen Sprühdrucken (zwischen 0,5 und 4 bar) ausgezeichnet sprühbar und führen zu einem gleichmäßigen Sprühbild.

Bevorzugte Polyolefine sind entweder vollständig amorph oder weisen nur eine geringe Kristallinität auf. Im allgemeinen soll ein Kristallinitätsgrad von 25 %, bestimmt über Röntgenbeugung, nicht überschritten werden.

Geeignete Produkte können beispielsweise hergestellt werden durch radikalischen Abbau marktgängiger, weitgehend amorpher Polyalphaolefine mit Erweichungspunkten zwischen 80 und 140 °C und Viskositäten zwischen 5 000 und 100 000 mPas bei 190 °C. Diese Herstellungsmethode ist Gegenstand der deutschen Patentanmeldung P 40 00 695.6 vom gleichen Tage. Sie können aber auch durch jedes andere Verfahren hergestellt werden, vorausgesetzt, sie weisen anschließend die anspruchsgemäßen Merkmale auf.

Diagramm 3 zeigt den Viskositätsverlauf eines derartigen erfindungsgemäßen Produktes in Abhängigkeit von der Schergeschwindigkeit und der Temperatur. Die "kritische Sprühtemperatur" liegt unter 180 °C.

Geeignete, weitgehend amorphe Polyalphaolefine können zur Verbesserung der Haftung auf üblichen Substraten funktionelle Gruppen tragen. Diese funktionellen Gruppen können entweder durch Copolymerisation mit geringen Mengen funktioneller Monomerer oder vorzugsweise durch radikalische Umsetzung marktgängiger Polyalphaolefine mit derartigen funktionellen Monomeren eingebracht werden. Geeignete Monomere sind beispielsweise Maleinsäureanhydrid, Fumarsäure, Acryl- und Methacrylsäure, Itaconsäure, Aconitsäure und deren Derivate wie z.B. Ester oder Amide sowie Vinyltrimethoxysilan (VTMO) und 3-Methacryloxypropyltrimethoxysilan (MEMO; $H_2C=C(CH_3)COO(CH_2)_3Si-(OCH_3)_3$). Sie werden üblicherweise in Mengen von 0,1 bis 10 Gew.-%, vorzugsweise 0,5 bis 5 Gew.-%, bezogen auf das Polyalphaolefin, eingesetzt. Dabei werden übliche Radikalstarter wie z. B. Dicumylperoxid oder 2,2'-Azo-bis(2-acetoxy-propan) in Mengen von 0,05 bis 3 Gew.-%, vorzugsweise von 0,1 bis 2 Gew.-% eingesetzt. Die Pfropfreaktion findet dann bei erhöhten Temperaturen, in der Regel zwischen 100 und 300 °C statt. Man erhält auf diese Weise Polymere mit hoher Kohäsion und verbesserter Adhäsion gegenüber bestimmten Substraten wie Metall-, Kunststoff- oder Glasoberflächen.

In einer bevorzugten Ausführungsform ist das weitgehend amorphe Polyalphaolefin ein binäres oder ternäres Copolymerisat aus Olefinen mit 2 bis 10 Kohlenstoffatomen. Dieses Copolymerisat hat im Vorzugsbereich folgende Monomerenzusammensetzung:
3 bis 75 Gew.-% eines alpha-Olefins mit 4 bis 10 Kohlenstoffatomen,
25 bis 95 Gew.-% Propen und
0 bis 20 Gew.-% Ethen.

Darüber hinaus können, wie bereits erwähnt, noch funktionelle Monomere mit gebunden sein.

In einer besonders bevorzugten Ausführungsform wird als alpha-Olefin mit 4 bis 10 Kohlenstoffatomen Buten-1 verwendet.

Selbstverständlich können auch Mischungen verschiedener erfindungsgemäßer Polyalphaolefine eingesetzt werden.

Die sprühbare Heißschmelzmasse kann die im Hotmeltsektor üblichen Zusätze enthalten, deren Anteil insgesamt aber nicht über 30 Gew.-% liegen sollte und vorzugsweise 5 bis 20 Gew.-% beträgt. Hierbei ist in erster Linie an Wachse (z. B. mikrokristalline Wachse, synthetische Wachse vom Fischer-Tropsch- oder Polyolefintyp) und/oder an Harze (z. B. modifizierte Kohlenwasserstoffterpenharze, Polyterpenharze, aliphatische Kohlenwasserstoffharze, hydrierte Kolophoniumester) zu denken. Bei den Wachsen erweisen sich insbesondere Mikrowachse als günstig. Auch der Einsatz paraffinischer und aromatischer Öle ist möglich. Selbstverständlich kann die erfindungsgemäße Heißschmelzmasse darüber hinaus die für Kunststoffe üblichen Additive enthalten wie z. B. Wärme- und Lichtstabilisatoren, optische Aufheller, Antistatika, Gleit- und Antiblockmittel, Nukleierungsmittel, Füll- und Farbstoffe, Pigmente sowie flammhemmende Mittel.

Die Verbesserung der Sprühbarkeit bezieht sich selbstverständlich sowohl auf das eingangs erwähnte "Atomisieren" als auch auf das "Spinnsprühen". Ebenso wie bei dem in den folgenden Beispielen beschriebenen Atomisieren ist für ein gleichmäßiges, durch Spinnsprühen erzeugtes Sprühbild bei der jeweiligen Applikationstemperatur ebenfalls eine von der Schergeschwindigkeit weitgehend unabhängige Viskosität der zu sprühenden Masse erforderlich. Wäre dies nicht der Fall, so würde man beispielsweise bei intermittierenden Sprühvorgängen keine konstante Sprühbreite erreichen können. Sowohl beim Beginn als auch bei Beendigung des jeweiligen Sprühzyklus wäre dann aufgrund niedrigerer Schergeschwindigkeit die Viskosität erhöht und demzufolge das Sprühbild verändert.

Beispiele

Die Sprühversuche wurden mit dem Gerät CL 200 der Fa. Meltex Verbindungs-Technik GmbH, D-2120 Lüneburg, durchgeführt. Als Sprühkopf wurde das Modell Meltex EP 26 SD verwendet. Hierbei handelt es sich um eine sog. Doppelluftdüse. Die über eine Zahnradpumpe geförderte Schmelze (Menge variierbar) verläßt die Düse über eine Öffnung von ca. 1 mm Durchmesser. Um das Austrittsloch herum ist konzentrisch eine ringförmige Schlitzdüse angebracht, durch die Heißluft ("Innenluft") gepreßt wird. Davor liegende Leitkanäle verleihen der Heißluft einen Drall. Neben dieser Ringdüse sind 4 weitere Luftaustrittslöcher angebracht ("Außenluft"). Diese bewirken einerseits ein Zusammenschieben des Sprühkegels zu einer ellipsenförmigen Grundfläche, andererseits eine exaktere Seitenbegrenzung.

Das Verhältnis von Innen- zu Außenluftmenge muß für jeden Sprühversuch - abhängig vom zu sprühenden Stoff und den übrigen Geräteparametern - hinsichtlich eines gleichmäßigen Sprühbildes neu optimiert werden. Hieraus ergeben sich dann zwangsläufig Unterschiede in der Sprühbreite. Ein gut zu sprühendes Produkt liefert bei vorgegebener Viskosität also ein gleichmäßiges und gleichzeitig breites Sprühbild.

Bei den Versuchen wurden bis auf den Sprühdruck und das je nach Versuch neu zu optimierende Verhältnis von Außen- und Innenluft alle übrigen Geräteparameter einschließlich der Auftragsmenge konstant gehalten:

```
Auftragsmenge:                        3,8 g/min
Auftragsgeschwindigkeit:              5   m/min
Temperatur im Schmelzbehälter:  190 °C
Temperatur im Transportschlauch: 190 °C
Düsentemperatur:                190 °C
Lufterhitzertemperatur:         190 °C
Luftdruck                    1, 2,5 und 4 bar
```

Visuell beurteilt wurden
- Gleichmäßigkeit des Sprühbildes
- Sprührandbegrenzung
- Fadenfeinheit
- Störungsfreiheit beim Sprühvorgang
  (d. h. keine Klecksbildung auf dem Substrat)

Hierfür wurde eine Notenskala von 1 bis 6 (1 = sehr gut, 6 = schlecht) erstellt. Die Sprühbreite wurde gemessen, wobei die Einstufung in die Notenskala wie folgt durchgeführt wurde:

Sprühbreite 15 cm und darüber:    1
Sprühbreite 13 - 14 cm:           2
Sprühbreite 11 - 12 cm:           3
Sprühbreite 9 - 10 cm:            4
Sprühbreite 7 - 8 cm:             5
Sprühbreite weniger als 7 cm:     6

Folgende Produkte bzw. Formulierungen kamen zum Einsatz:
A: Nicht erfindungsgemäßes ataktisches Polypropylen

Viskosität $\eta$ (bei 190 °C)      2 700 mPas

Erweichungspunkt EP (Ring- und Kugel-Methode):      155 °C

Penetration (100/25/5):      32 0,1 mm

Molekulargewicht Mw (Gewichts-mittel):      48 000

Molekulargewicht Mn (Zahlen-mittel):      5 500

B: Nicht erfindungsgemäßes amorphes Ethen/Propen/Buten-1-Terpolymer
| | |
|---|---|
| $\eta$: | 8 500 mPas |
| EP: | 85 °C |
| Penetration: | 15 0,1 mm |
| Mw: | 65 000 |
| Mn: | 7 000 |

C: Nichterfindungsgemäße Mischung aus einem Propen/Buten-1-Copolymer (Viskosität 2 500 mPas) und einem Ethen/Propen/Buten-1-Terpolymer (Viskosität 21 500 mPas), Verhältnis 40:60
| | |
|---|---|
| $\eta$: | 9 400 mPas |
| EP: | 126 °C |
| Penetration: | 12 0,1 mm |
| Mw: | 73 000 |
| Mn: | 8 200 |

1. Erfindungsgemäßes Ethen/Propen/Buten-1-Terpolymer
| | |
|---|---|
| Dichte: | 0,87 g/cm$^3$ |
| $\eta$: | 2 700 mPas |
| EP: | 104°C |
| Penetration: | 23 0,1 mm |
| Mw: | 45 000 |
| Mn: | 7 300 |

2. Erfindungsgemäßes Ethen/Propen/Buten-1-Terpolymer
| | |
|---|---|
| Dichte: | 0,87 g/cm$^3$ |
| $\eta$: | 7 800 mPas |
| EP: | 103 °C |
| Penetration: | 17 0,1 mm |
| Mw: | 60 000 |
| Mn: | 10 000 |

3. Erfindungsgemäße Mischung bestehend aus 80 Gewichtsteilen des Terpolymeren aus 2 und 20 Gewichtsteilen plastischem Mikrowachs (Lunaflex(R) MB)
| | |
|---|---|
| $\eta$: | 2 700 mPas |
| EP: | 105 °C |
| Penetration: | 23 0,1 mm |

4. Erfindungsgemäße Mischung bestehend aus 80 Gewichtsteilen 2 sowie 10 Gewichtsteilen plastischem Mikrowachs (Lunaflex(R) MB) und 10 Gewichtsteilen Kohlenwasserstoffharz (Escorez(R) 1102)
| | |
|---|---|
| $\eta$: | 3 400 mPas |

EP:        105 °C
Penetration:   25 0,1 mm

Sprühversuch 1: Sprühdruck 4 bar

| Produkt bzw. Formulierung | A | B | C | 1 | 2 | 3 | 4 |
|---|---|---|---|---|---|---|---|
| Sprühbreite | 3 | 3 | 4 | 1 | 3 | 1 | 2 |
| Gleichmäßigkeit des Sprühbildes | 3 | 4 | 4 | 2 | 1 | 3 | 2 |
| Sprührandbegrenzung | 3 | 4 | 4 | 2 | 1 | 3 | 3 |
| Fadenfeinheit | 2 | 3 | 2 | 1 | 1 | 2 | 2 |
| Störungsfreiheit beim Sprühvorgang | 5 | 4 | 3 | 1 | 2 | 1 | 1 |
| Gesamtnote | 3,2 | 3,6 | 3,4 | 1,4 | 1,6 | 2,0 | 2,0 |

Sprühversuch 2: Sprühdruck 2,5 bar

| Produkt bzw. Formulierung | A | B | C | 1 | 2 | 3 | 4 |
|---|---|---|---|---|---|---|---|
| Sprühbreite | 3 | 4 | 4 | 3 | 2 | 2 | 2 |
| Gleichmäßigkeit des Sprühbildes | 4 | 6 | 4 | 1 | 2 | 3 | 3 |
| Sprührandbegrenzung | 3 | 5 | 4 | 3 | 3 | 3 | 3 |
| Fadenfeinheit | 4 | 4 | 3 | 2 | 2 | 2 | 3 |
| Störungsfreiheit beim Sprühvorgang | 6 | 5 | 3 | 1 | 2 | 2 | 1 |
| Gesamtnote | 4,0 | 4,8 | 3,6 | 2,0 | 2,2 | 2,4 | 2,4 |

Sprühversuch 3: Sprühdruck 1 bar

| Produkt bzw. Formulierung | A | B | C | 1 | 2 | 3 | 4 |
|---|---|---|---|---|---|---|---|
| Sprühbreite | 5 | 4 | 4 | 3 | 2 | 3 | 3 |
| Gleichmäßigkeit des Sprühbildes | 6 | 6 | 5 | 2 | 3 | 3 | 4 |
| Sprührandbegrenzung | 6 | 6 | 5 | 3 | 3 | 3 | 3 |
| Fadenfeinheit | 5 | 4 | 4 | 3 | 3 | 3 | 3 |
| Störungsfreiheit beim Sprühvorgang | 6 | 6 | 4 | 3 | 2 | 1 | 1 |
| Gesamtnote | 5,6 | 3,6 | 4,4 | 2,8 | 2,8 | 2,6 | 2,8 |

**Patentansprüche**

1. Sprühbare Heißschmelzmasse mit maßgeschneiderter Rheologie auf Basis eines weitgehend amorphen Polyalphaolefins, wobei dieses einen Erweichungspunkt (Ring- und Kugel-Methode) zwischen 70 und 130 °C, eine Schmelzviskosität bei 190 °C zwischen 1 000 und 20 000 mPas, eine Dichte kleiner als 0,90 g/cm³ und eine Nadelpenetration zwischen 8 und 40 0,1 mm besitzt und das über Gelpermeationschromatographie bestimmte Molekulargewicht des amorphen Polyalphaolefins im Gewichtsmittel (Mw) maximal 80 000 und im Zahlenmittel (Mn) mindestens 4 000 beträgt, wobei die aus dem Gewichtsmittel und dem Zahlenmittel des Molekulargewichtes gebildete Differenz den sechsfachen Wert des Zahlenmittels nicht übersteigen darf.

2. Sprühbare Heißschmelzmasse gemäß Anspruch 1,
   dadurch gekennzeichnet,
   daß das weitgehend amorphe Polyalphaolefin ein binäres oder ternäres Copolymerisat aus Olefinen mit 2 bis 10 Kohlenstoffatomen ist.

3. Sprühbare Heißschmelzmasse gemäß den Ansprüchen 1 oder 2,
   dadurch gekennzeichnet,
   daß das weitgehend amorphe Polyalphaolefin folgende Monomerenzusammensetzung hat:
   3 bis 75 Gew.-%         eines alpha-Olefins mit 4 bis 10 Kohlenstoffatomen,
   25 bis 95 Gew.-%        Propen und
   0 bis 20 Gew.-%         Ethen.

4. Sprühbare Heißschmelzmasse gemäß Anspruch 3,
   dadurch gekennzeichnet,
   daß als alpha-Olefin mit 4 bis 10 Kohlenstoffatomen Buten-1 verwendet wird.

5. Sprühbare Heißschmelzmasse gemäß den Ansprüchen 1 bis 4,
   dadurch gekennzeichnet,
   daß das Polyalphaolefin funktionelle Gruppen trägt.

6. Sprühbare Heißschmelzmasse gemäß den Ansprüchen 1 bis 5,
   dadurch gekennzeichnet,
   daß sie maximal 30 Gew.-%, vorzugsweise 5 bis 20 Gew.-% Wachse und/oder Harze enthält.

7. Sprühbare Heißschmelzmasse gemäß Anspruch 6,
   dadurch gekennzeichnet,
   daß als Wachse Mikrowachse verwendet werden.

**Claims**

1. A sprayable hot-melt composition with made-to-measure rheology based on a substantially amorphous poly-α-olefin, the latter having a softening point (ring- and-ball method) of between 70 and 130°C, a melt viscosity at 190°C of between 1,000 and 20,000 mPa·s, a density of less than 0.90 g/cm³ and a needle penetration of between 8 and 40 0.1 mm, and the molecular weight determined by gel permeation chromatography of the amorphous poly-α-olefin being not more than 80,000 as a weight average (Mw) and not less than 4,000 as a number average (Mn), and the difference derived from the weight average and the number average of the molecular weight not exceeding six times the value of the number average.

2. A sprayable hot-melt composition according to claim 1, characterised in that the substantially amorphous poly-α-olefin is a binary or ternary copolymer of olefins containing 2 to 10 carbon atoms.

3. A sprayable hot-melt composition according to either of claims 1 or 2, characterised in that the substantially amorphous poly-α-olefin has the following monomeric composition:
   3 to 75 % by weight of an α-olefin containing 4 to 10 carbon atoms,
   25 to 95 % by weight of propene, and
   0 to 20 % by weight of ethylene.

4. A sprayable hot-melt composition according to claim 3, characterised in that 1-butene is used as $\alpha$-olefin containing 4 to 10 carbon atoms.

5. A sprayable hot-melt composition according to any of claims 1 to 4, characterised in that the poly-$\alpha$-olefin carries functional groups.

6. A sprayable hot-melt composition according to any of claims 1 to 5, characterised in that it contains not more than 30 % by weight, preferably 5 to 20 % by weight, of waxes and/or resins.

7. A sprayable hot-melt composition according to claim 6, characterised in that microwaxes are used as waxes.


**Revendications**

1. Masse thermo-fusible pulvérisable, présentant une rhéologie sur mesure, à base d'une poly-alpha-oléfine largement amorphe, cette dernière présentant un point de ramollissement (méthode de l'anneau et de la bille) compris entre 70 et 130°C, une viscosité à l'état fondu à 190°C comprise entre 1 000 et 20 000 m.Pas, une densité inférieure à 0,90 g/cm³ et une pénétration à l'aiguille de 0,1 mm entre 8 et 40, le poids moléculaire de la poly-alpha-oléfine amorphe, déterminé par une chromatographie de perméation sur gel, étant en moyenne pondérale ($M_w$) de 80 000 au maximum et en moyenne numérique ($M_n$) de 4 000 au moins, la différence formée à partir de la moyenne pondérale et de la moyenne numérique du poids moléculaire ne devant pas dépasser la valeur sextuple de la moyenne numérique.

2. Masse thermo-fusible pulvérisable selon la revendication 1,
   caractérisée par le fait que la poly-alpha-oléfine largement amorphe est un produit binaire ou ternaire de copolymérisation obtenu à partir d'oléfines comportant de 2 à 10 atomes de carbone.

3. Masse thermo-fusible pulvérisable selon la revendication 1 ou 2,
   caractérisée par le fait que la poly-alpha-oléfine largement amorphe présente la composition suivante des monomères :
   de 3 à 75 %          en poids d'une alpha-oléfine comportant de 4 à 10 atomes de carbone,
   de 25 à 95 %          en poids de propène, et
   de 0 à 20 %          en poids d'éthène.

4. Masse thermo-fusible pulvérisable selon la revendication 3,
   caractérisée par le fait que l'on utilise le butène-(1) en tant qu'alpha-oléfine comportant de 4 à 10 atomes de carbone.

5. Masse thermo-fusible pulvérisable selon les revendications 1 à 4,
   caractérisée par le fait que la poly-alpha-oléfine porte des groupes fonctionnels.

6. Masse thermo-fusible pulvérisable selon les revendications 1 à 5,
   caractérisée par le fait qu'elle renferme au maximum 30 % en poids, de préférence de 5 à 20 % en poids, de cires et/ou de résines.

7. Masse thermo-fusible pulvérisable selon la revendication 6,
   caractérisée par le fait que l'on utilise comme cires des micro-cires.

Diagramm 1

Viskosität
(mPa s)

Schergeschwindigkeit

—•— 1    s$^{-1}$
—O— 100  s$^{-1}$
—X— 1000 s$^{-1}$

Temperatur
(°C)

Diagramm 2

Viskosität
(mPa s)

Schergeschwindigkeit

—•— 1    s$^{-1}$
—O— 100  s$^{-1}$
—X— 1000 s$^{-1}$

Temperatur
(°C)

9

Diagramm 3

Viskosität (mPa s) als Funktion der Temperatur (°C)

Schergeschwindigkeit
- ● — 1 $s^{-1}$
- ○ — 100 $s^{-1}$
- ✗ — 1000 $s^{-1}$